# EUROPEAN PATENT APPLICATION

(11) **EP 3 992 258 A1**
(43) Date of publication of application: **04.05.2022**
(21) Application number: 20890900.2
(22) Date of filing: 20.11.2020
(51) Int. Cl.: C09D 175/04, C09D 4/06, C09D 7/40

(54) **COATING COMPOSITION FOR POLYURETHANE FOAM AND POLYURETHANE FOAM USING SAME**

(30) Priority: 21.11.2019 KR 20190150454
(71) Applicant: LG Chem, Ltd., Seoul 07336 (KR)
(72) Inventor: CHOI, Hong Jun, Daejeon 34122 (KR); YANG, In Suk, Daejeon 34122 (KR); YOON, Kyung Jun, Daejeon 34122 (KR)
(74) Representative: Plasseraud IP
(86) International application number: PCT/KR2020/016450
(87) International publication number: WO 2021/101306

(57) **Abstract**

The present invention provides a coating agent composition for polyurethane foam which not only may exhibit adhesive properties suitable for an automated process for producing a battery pack, but also has a uniform surface and has excellent durability and reliability in a severe environment, and polyurethane foam using the same. Specifically, the present invention provides a coating agent composition for polyurethane foam, the coating agent composition containing a (meth)acrylate-based monomer, an urethane acrylate, a photoinitiator, and inorganic fine particles, wherein the content of the inorganic fine particles is 100 parts by weight to 500 parts by weight based on 100 parts by weight of the photoinitiator, and polyurethane foam using the same.

## Description

### Technical Field

This application claims the benefit of the filing date of Korean Patent Application No. 10-2019-0150454, filed on November 21, 2019, in the Korean Intellectual Property Office, the disclosure of which is incorporated herein in its entirety by reference.

The present invention relates to a coating agent composition for polyurethane foam and polyurethane foam using the same.

### Background Art

Polyurethane foam is relatively inexpensive, is easy to mold, has high elasticity, and is used in various applications such as battery packs. Polyurethane foam has adhesive properties due to its porous structure, and for this reason, a problem arises in that the polyurethane foam cannot be laminated or adsorbed in the process of laminating the polyurethane foam.

In an attempt to solve this problem, a surface treatment for reducing the adhesive properties of the polyurethane foam is performed. In this case, however, problems arise in that the adhesive properties are not reduced to a level suitable for application to an automated battery pack process, the surface of the foam is not uniform, and deformation occurs during long-term storage.

Accordingly, there is a need for research on polyurethane foam not only having adhesive properties suitable for an automated process for producing a battery pack, but also having excellent durability and reliability in a severe environment.

### DISCLOSURE

### Technical Problem

An object to be achieved by the present invention is to provide a coating agent composition for polyurethane foam not only having adhesive properties suitable for an automated process for producing a battery pack, but also having excellent durability and reliability in a severe environment, and polyurethane foam using the same.

However, the objects to be solved by the present invention are not limited to the above-mentioned object, and other objects which are not mentioned herein will be clearly understood by those skilled in the art from the following description.

### Technical Solution

To achieve the above object, in accordance with one aspect of the present invention, there is provided a coating agent composition for polyurethane foam, the coating agent composition containing a (meth)acrylate-based monomer, an urethane acrylate, a photoinitiator, and inorganic fine particles, wherein the content of the inorganic fine particles is 100 parts by weight to 500 parts by weight based on 100 parts by weight of the photoinitiator.

To achieve the above object, in accordance with another aspect of the present invention, there is provided polyurethane foam including: a polyurethane foam layer; and a coating layer provided on one surface of the polyurethane foam layer and including a cured product of the coating agent composition for polyurethane foam, wherein the surface of the coating layer has a frictional force of 0.4 N or less.

### Advantageous Effects

The coating agent composition for polyurethane foam according to one aspect of the present invention and polyurethane foam using the same not only may exhibit adhesive properties suitable for an automated process for producing a battery pack, but also have a uniform surface and may have excellent durability and reliability in a severe environment.

### Best Mode

The terms and words used in the present specification and the appended claims should not be interpreted as being limited to typical meanings or dictionary definitions, but should be interpreted as having meanings and concepts consistent with the technical spirit of the present invention based on the rule according to which the inventors can appropriately define the concepts of the terms to describe their invention in the best manner. Accordingly, it should be understood that the embodiments described in the present specification and the configurations shown in the drawings are merely preferred examples, but do not cover all the technical spirits of the present invention, and thus there may be various equivalents and modifications capable of replacing them at the time of filing the present application.

Throughout the present specification, it is to be understood that when any part is referred to as "including" any component, it does not exclude other components, but may further include other components, unless otherwise specified.

Throughout the present specification, when any member is referred to as being "on" another member, it not only refers to a case where any member is in contact with another member, but also a case where a third member exists between the two members.

Throughout the present specification, the term "(meth)acrylate" is meant to include acrylate and methacrylate.

Throughout the present specification, the "weight-average molecular weight" and "number-average molecular weight" of any compound may be calculated using the molecular weight and molecular weight distribution of the compound. Specifically, the molecular weight and molecular weight distribution of a compound may be obtained by: placing tetrahydrofuran (THF) and the compound in a 1-ml glass vial to prepare a test sample in which the concentration of the compound is 1 wt%; filtering a standard sample (polystyrene) and the test sample through a filter (pore size: 0.45 µm); injecting each of the sample filtrates into a GPC injector; and comparing the elution time of the test sample with a calibration curve of the standard sample. At this time, Infinity II 1260 (Agilent Technologies, Inc.) may be used as a measurement instrument, and the flow rate and the column temperature may be set at 1.00 mL/min and 40.0°C, respectively.

Through the present invention, the viscosity of a compound may be a value measured by a Brookfield viscometer at a temperature of 25°C.

According to one embodiment of the present invention, there is provided a coating agent composition for polyurethane foam, the coating agent composition containing a (meth)acrylate-based monomer, an urethane acrylate, a photoinitiator, and inorganic fine particles, wherein the content of the inorganic fine particles is 100 parts by weight to 500 parts by weight based on 100 parts by weight of the photoinitiator. The coating agent composition for polyurethane foam according to the present invention has excellent durability and reliability in a severe environment by adjusting the ratio of the content of the inorganic fine particles to the content of the photoinitiator within a suitable range.

According to one embodiment of the present invention, the content of the inorganic fine particles may be 100 parts by weight to 500 parts by weight based on 100 parts by weight of the photoinitiator. Specifically, the content of the inorganic fine particles may be 110 parts by weight to 490 parts by weight, 120 parts by weight to 480 parts by weight, 130 parts by weight to 470 parts by weight, 140 parts by weight to 460 parts by weight, 150 parts by weight to 450 parts by weight, 160 parts by weight to 440 parts by weight, 170 parts by weight to 430 parts by weight, 180 parts by weight to 420 parts by weight, 190 parts by weight to 410 parts by weight, 200 parts by weight to 400 parts by weight, 210 parts by weight to 390 parts by weight, 220 parts by weight to 380 parts by weight, 230 parts by weight to 370 parts by weight, 240 parts by weight to 360 parts by weight, 250 parts by weight to 350 parts by weight, 260 parts by weight to 340 parts by weight, 270 parts by weight to 330 parts by weight, 280 parts by weight to 320 parts by weight, or 290 parts by weight to 310 parts by weight, based on 100 parts by weight of the photoinitiator. Where the ratio of the content of the inorganic fine particles to the content of the photoinitiator is adjusted within the above-described range, it is possible to improve cohesion, prevent yellowing, and achieve physical properties suitable for an automated process by making the surface of a coating layer uniform.

The (meth)acrylate-based monomer may be crosslink-polymerized by UV irradiation to form a crosslinked copolymer, and may increase the adhesive strength of the composition. The (meth)acrylate-based monomer may be a (meth)acrylate containing an alkyl group having 1 to 20 carbon atoms. Specifically, the (meth)acrylate-based monomer may include at least one selected from the group consisting of methyl (meth)acrylate, ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, 2-ethylbutyl (meth)acrylate, n-octyl (meth)acrylate, isooctyl (meth)acrylate, 2-hydroxyethyl (meth)acrylate, 2-hydroxypropyl (meth)acrylate, and isobornyl (meth)acrylate. More specifically, the (meth)acrylate-based monomer is preferably one selected from among 2-hydroxyethyl acrylate, 2-hydroxypropyl acrylate, 2-hydroxypropyl methacrylate, isobornyl acrylate, and combinations thereof.

The urethane acrylate is a compound produced by introducing an acrylate group to the end of a urethane polymer so that the urethane polymer may be UV-cured. The term "urethane acrylate" refers to a group of compounds having a urethane bond and an acrylate group. The urethane acrylate may be divided, according to the number of the acrylate end groups, into a monofunctional urethane acrylate, a bifunctional urethane acrylate, a trifunctional urethane acrylate, a hexafunctional urethane acrylate, and the like. For example, the urethane acrylate may be a polyfunctional urethane acrylate.

The urethane acrylate contains a urethane bond formed by a polymerization reaction between an isocyanate-based monomer and a polyol. For example, the urethane acrylate may be a polymer which contains a urethane bond formed by the reaction of an isocyanate-based compound with a (meth)acrylic acid hydroxyalkyl ester-based compound and has a weight-average molecular weight of 500 g/mol to 50,000 g/mol.

The weight ratio between the (meth)acrylate-based monomer and the urethane acrylate may be 1:0.8 to 1:1.5. Where the weight ratio between the (meth)acrylate-based monomer and the urethane acrylate is adjusted within the above-described range, it is possible to improve the durability of the coating on the polyurethane foam.

The viscosity of the coating agent composition for polyurethane foam may be 200 cPs to 400 cPs. Where viscosity of the coating agent composition for polyurethane foam is adjusted within the above-described range, it is possible to improve the workability of the composition.

Specific examples of the isocyanate-based compound include aliphatic isocyanate-based compounds such as hexamethylene diisocyanate (HMDI) and isophorone diisocyanate (IPDI), and aromatic isocyanate-based compounds such as toluene diisocyanate (TDI) and methylene diphenyl diisocyanate (MDI), which may be used alone or in combination of two or more.

Specific examples of the (meth)acrylic acid hydroxyalkyl ester-based compound include 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 2-hydroxyethylene glycol (meth)acrylate and 2-hydroxypropylene glycol (meth)acrylate, which may be used in combination of two or more.

The photoinitiator may initiate the curing reaction of the composition in response to irradiation with UV light or the like in a process of forming a urethane foam layer. The photoinitiator may be one selected from the group consisting of a benzoin-based initiator, a hydroxy ketone-based initiator, an amino ketone-based initiator, a caprolactam-based initiator, and combinations thereof. Specifically, examples of the photoinitiator may include one or more selected from the group consisting of benzoinmethyl ether, 2,4,6-trimethylbenzoyl diphenylphosphine oxide, bis(2,4,6-trimethylbenzoyl)phenylphosphine oxide, α,α-methoxy-α-hydroxyacetophenone, 2-benzoyl-2-(dimethylamino)-1-[4-(4-morpholinyl)phenyl]-1-butanone, and 2,2-dimethoxy-2-phenylacetophenone.

The photoinitiator is preferably added in an amount of 3 wt% to 5 wt% based on the total weight of the composition. If the photoinitiator is added in an amount of less than 3 wt%, sufficient crosslinking may not be achieved, and the effect of improving cohesion may not be obtained, and if the photoinitiator is added in an amount of more than 5 wt%, durability and reliability may be degraded due to the occurrence of yellowing during long-term storage.

The coating agent composition of the present invention contains inorganic fine particles. According to one embodiment of the present invention, the inorganic fine particles may be nanosized inorganic fine particles, for example, nanosized fine particles having an average particle diameter of about 100 nm or less, about 10 nm to about 100 nm, or about 10 nm to about 50 nm. In addition, the inorganic fine particles may be, for example, at least one type of inorganic fine particles selected among silica nanoparticles, aluminum oxide fine particles, titanium oxide fine particles, and zinc oxide fine particles.

The inorganic fine particles are preferably added in an amount of 5 wt% to 15 wt% based on the total weight of the composition. If the inorganic fine particles are added in an amount of less than 5 wt%, the adhesive properties of the polyurethane foam may not be reduced, and if the inorganic fine particles are added in an amount of more than 15 wt%, the surface of the coating layer may not be uniform, and physical properties suitable for an automated process may not be achieved.

The coating agent composition for polyurethane foam according to the present invention may further contain an additive. The additive may be, for example, at least one selected from the group consisting of a flame retardant, a colorant, a lubricant, an antioxidant, a light stabilizer, a release agent, an antistatic agent, a crosslinking agent, an antibacterial agent, a processing aid, a metal deactivator, an anti-friction agent, an anti-wear agent, and a coupling agent, but the present invention is not limited thereto, and it can be understood by those skilled in the art that these additives may be used depending on the intended use or as needed or according to the manufacturer's instructions.

According to another embodiment of the present invention, there is provided polyurethane foam including: a polyurethane foam layer; and a coating layer provided on one surface of the polyurethane foam layer and including a cured product of the coating agent composition for polyurethane foam. As the polyurethane foam has the above composition, the frictional force of the surface thereof may be 0.4 N or less. Specifically, the frictional force of the surface may be more than 0 N to not more than 0.4 N, 0.05 N to 0.35 N, or 0.10 N to 0.30 N. By adjusting the frictional force of the surface within the above-described range, it is possible to improve the efficiency of an automated process.

The thickness of the polyurethane foam may be 0.05 mm to 30 mm. Specifically, the thickness of the polyurethane foam may be 0.10 mm to 25 mm, 0.50 mm to 20 mm, or 1.00 mm to 15 mm. By adjusting the thickness of the polyurethane foam within the above-described range, it is possible to adjust the frictional force of the surface.

### Mode for Invention

Hereinafter, the present invention will be described in detail with reference to examples. However, the examples according to the present invention may be modified into various different forms, and the scope of the present invention is not construed as being limited to the examples described below. The examples in the present specification are provided to more completely describe the present invention to those skilled in the art.

### Examples 1 to 6 and Comparative Examples 1 to 5

The components shown in Table 1 below were mixed together in the amounts shown in Table 1 to prepare compositions. Each of the compositions was applied onto one surface of polyurethane foam having a density of 0.30 g/cm³ and a thickness of 2.0 mm, and then photocured by irradiation with UV light at a wavelength of 280 to 350 nm using a black light/metal halide fluorescent lamp, and then heat-cured at a temperature of 130°C for 30 minutes, thus forming coating layers.

The raw materials used in Examples 1 to 6 and Comparative Examples 1 to 5 above are as follows.
* (Meth)acrylate-based monomer: a mixture of 2-hydroxyethyl acrylate, 2-hydroxypropyl acrylate, 2-hydroxyethyl methacrylate and isobornyl acrylate
* Urethane acrylate: polyurethane diacrylate
* Photoinitiator: benzophenone
* Inorganic fine particles: silica gel

The physical properties of the specimens prepared in Examples 1 to 6 and Comparative Examples 1 to 5 above were measured by the following methods, and the results of the measurement are shown in Table 2 below.

### Frictional force (N)

Polyurethane (PU) foam was attached to a wooden or plastic plate having a predetermined size so that the foam side faced up. The polyurethane foam specimen was attached onto a jig (IMADA, DS2 50n) manufactured for measuring frictional force so that the polyurethane foam side faced up. Then, the frictional force was measured while slowly rotating the lever of the jig (jig operating speed: 10 mm/sec, 1 cycle/sec). The maximum value of the frictional force measured while moving the jig was recorded.

### Coating workability

After coating, the thickness of a surface treatment layer was measured using a microscope. Evaluation was performed as follows. O: the thickness was uniform within a range of 1 to 2 µm; and X: the thickness did not satisfy the above criterion.

### Automated process workability

30 sheets of polyurethane foam specimens were stacked and then lifted using an automatic adsorption device. Evaluation was performed as follows. O: the polyurethane foam specimens were lifted one by one; and X: the above criterion was not satisfied.

**[Table 1]**

| | **Example** | | | | | | **Comparative Example** | | | | |
|---|---|---|---|---|---|---|---|---|---|---|---|
| | **1** | **2** | **3** | **4** | **5** | **6** | **1** | **2** | **3** | **4** | **5** |
| (**Meth)acrylate-based monomer (wt%)** | 43.5 | 45 | 44 | 42 | 41 | 40 | 47 | 46 | 37 | 43 | 40 |
| **Urethane acrylate (wt%)** | 43.5 | 45 | 44 | 43 | 42 | 40 | 48 | 46 | 38 | 44 | 41 |
| **Photoinitiator (wt%)** | 3 | 5 | 5 | 5 | 5 | 5 | 5 | 5 | 5 | 1 | 7 |
| **Inorganic fine particles (wt%)** | 10 | 5 | 7 | 10 | 12 | 15 | 0 | 3 | 20 | 12 | 12 |

**[Table 2]**

| | **Example** | | | | | | **Comparative Example** | | | | |
|---|---|---|---|---|---|---|---|---|---|---|---|
| | **1** | **2** | **3** | **4** | **5** | **6** | **1** | **2** | **3** | **4** | **5** |
| **Frictional force (N)** | 0.19 | 0.32 | 0.25 | 0.17 | 0.16 | 0.13 | 0.60 | 0.37 | 0.05 to 0.5 | 0.40 | 0.14 |
| **Coating workability** | ○ | ○ | ○ | ○ | ○ | ○ | ○ | ○ | × | ○ | ○ |
| **Automated process workability** | ○ | ○ | ○ | ○ | ○ | ○ | × | × | × | × | ○ |

Referring to Table 2 above, it was confirmed that Comparative Examples 1 and 2 did not satisfy the automated process workability, because they did not satisfy the content of the inorganic fine particles. Furthermore, it was confirmed that Comparative Example 3, in which the content of the inorganic fine particles was excessively high, satisfied neither of the coating workability and the automated process workability. In addition, it was confirmed that Comparative Example 4, in which the content of the photoinitiator was excessively low, did not satisfy the automated process workability. However, it was confirmed that Comparative Example 5, in which the content of the photoinitiator was excessively high, satisfied the above-described evaluation criteria, but when it was stored for a long period of time, a problem arose in that yellowing of the coating layer occurred. In contrast, it was confirmed that Examples 1 to 6 of the present invention satisfied all of the frictional force, the coating workability and the automated process workability.

Although the present invention has been described above with reference to the limited embodiment, the present invention is not limited thereto, and various modifications and alterations may be made by those skilled in the art without departing from the technical spirit of the present invention and equivalents to the appended claims.

## Claims

1. A coating agent composition for polyurethane foam, the coating agent composition containing a (meth)acrylate-based monomer, an urethane acrylate, a photoinitiator, and inorganic fine particles,
wherein a content of the inorganic fine particles is 100 parts by weight to 500 parts by weight based on 100 parts by weight of the photoinitiator.

2. The coating agent composition of claim 1, wherein the photoinitiator is contained in an amount of 3 wt% to 5 wt%, and the inorganic fine particles are contained in an amount of 5 wt% to 15 wt%.

3. The coating agent composition of claim 1, wherein the inorganic fine particles have an average particle diameter of 100 nm or less.

4. The coating agent composition of claim 1, wherein the inorganic fine particles comprise at least one type selected from the group consisting of silica nanoparticles, aluminum oxide fine particles, titanium oxide fine particles, and zinc oxide fine particles.

5. The coating agent composition of claim 1, wherein the photoinitiator comprises one selected from the group consisting of a benzoin-based initiator, a hydroxy ketone-based initiator, an amino ketone-based initiator, a caprolactam-based initiator, and combinations thereof.

6. The coating agent composition of claim 1, wherein a weight ratio between the (meth)acrylate-based monomer and the urethane acrylate is 1:0.8 to 1:1.5.

7. The coating agent composition of claim 1, wherein the (meth)acrylate-based monomer is one selected from among 2-hydroxyethyl (meth)acrylate, 2-hydroxypropyl (meth)acrylate, isobornyl (meth)acrylate, and combinations thereof.

8. The coating agent composition of claim 1, wherein the urethane acrylate is a polyfunctional urethane acrylate having a weight-average molecular weight of 500 g/mol to 50,000 g/mol.

9. The coating agent composition of claim 1, having a viscosity of 200 cPs to 400 cPs.

10. A polyurethane foam comprising:
a polyurethane foam layer; and
a coating layer provided on one surface of the polyurethane foam layer and comprising a cured product of the coating agent composition for polyurethane foam according to any one of claims 1 to 9, wherein a surface of the coating layer has a frictional force of 0.4 N or less.

11. The polyurethane foam of claim 10, having a thickness of 0.05 mm to 30 mm.
